# EUROPÄISCHE PATENTSCHRIFT

(11) **EP 0 577 587 B1**
(45) Veröffentlichungstag und Bekanntmachung des Hinweises auf die Patenterteilung: **17.01.1996**
(21) Anmeldenummer: 93890127.9
(22) Anmeldetag: 25.06.1993
(51) Int. Cl.: E06C 9/04

(54) **Steigsprosse**
Climbing step
Echelon de remontée

(30) Priorität: 03.07.1992 AT 1364/92
(43) Veröffentlichungstag der Anmeldung: 05.01.1994
(73) Patentinhaber: ÖSTERREICHISCHE ELEKTRIZITÄTSWIRTSCHAFTS-AKTIENGESELLSCHAFT, A-1010 Wien (AT)
(72) Erfinder: Auer, Michael, A-9991 Dölsach 110 (AT); Winkler, Egon, A-9782 Nikolsdorf 112 (AT)
(74) Vertreter: Weinzinger, Arnulf, Dipl.-Ing.

(56) Entgegenhaltungen:
- EP-A- 0 077 043
- WO-A-87/00231
- AU-A- 6 729 042
- DE-B- 2 920 652
- DE-U- 8 806 921
- US-A- 3 153 832
- US-A- 4 618 028
- US-A- 4 932 497

## Beschreibung

Die Erfindung betrifft eine Steigsprosse für Leitungsmasten oder dergl., mit einem stangenförmigen Tritteil, an dessen einem Ende ein zur Befestigung am Mast oder dergl. vorgesehener Befestigungsteil und an dessen anderem Ende ein Trittbegrenzungs- und Abrutschsicherungsteil anschließt, wie sie beispielsweise aus US-A-4 932 497 bekannt ist.

Derartige Steigsprossen werden insbesondere bei Stromleitungsmasten verwendet, um ein Besteigen dieser Leitungsmasten für Installations- oder Reparaturarbeiten oder dergl. zu ermöglichen. Im einzelnen werden dabei in üblicher Weise an einem Eckstiel eines solchen Mastes Steigsprossen abwechselnd um 90° zueinander versetzt übereinander etwa in Abständen von 40 cm angebracht. Die bekannten Steigsprossen bestehen dabei aus Stangen, wobei am einen Stangenende ein Gewindeabschnitt als Befestigungsteil zur Befestigung der Steigsprosse am Mast-Eckstiel vorgesehen ist, und wobei am anderen Stangenende ebenfalls ein Gewindeabschnitt vorgesehen ist, auf den als Trittbegrenzungs- und Abrutschsicherungsteil eine Mutter aufgeschraubt ist.

Diese bekannten Steigsprossen sind vor allem bei Nässe und Vereisung relativ unsicher, so daß die Gefahr eines Abrutschens gegeben ist. Es wurden nun bereits Überlegungen angestellt, für die auf den Mast aufsteigenden Personen eine Seilsicherung in der Art wie beim Klettern vorzusehen, wobei ein Vorschlag dahinging, am Eckstiel des Mastes im Bereich der Steigsprossen zusätzlich Seilschlaufen anzubringen, an denen ein Kletterseil mit Hilfe von Karabinern angehängt werden kann. Diese Sicherungstechnik ist jedoch offensichtlich aufwendig, und zwar vor allem wegen der zusätzlichen Anbringung der Seilschlaufen und der Karabinerhaken.

Denkbar wäre auch eine Ausbildung der Steigsprossen mit Ringen am frei auskragenden äußeren Ende, in die Karabiner eingehängt werden, an denen schließlich das Sicherungsseil befestigt wird. Auch hiermit wäre offensichtlich ein relativ hoher Aufwand verbunden. Vor allem wäre bei dieser Lösung auch das Anbringen des Trittbegrenzungs- und Abrutschsicherungsteiles problematisch, der die Aufgabe hat, ein seitliches Abrutschen, in Längsrichtung der stangenförmigen Steigsprosse bzw. genauer gesagt von deren Tritteil, zu verhindern.

Der Erfindung lag daher die Aufgabe zugrunde, eine Steigsprosse der eingangs angeführten Art vorzusehen, die bei einfacher, preiswerter Ausbildung ein hohes Maß an Abrutschsicherheit ebenso wie eine einfache Möglichkeit der Sicherung mit einem Seil bietet.

Hierzu ist die erfindungsgemäße Steigsprosse der eingangs angegebenen Art dadurch gekennzeichnet, daß der Trittbegrenzungs- und Abrutschsicherungsteil durch einen vom Tritteil abgebogenen und zu einer Einhängöse mit einem seitlichen Einhängzugang für ein Sicherungsseil geformten Stangenabschnitt gebildet ist.

Mit einer derartigen Ausbildung wird der vorstehenden Zielsetzung in vorteilhafter Weise entsprochen. Der von Tritteil abgebogene, die Einhängöse bildende Stangenabschnitt erfüllt dabei zwei Funktionen, nämlich einerseits jene des Trittbegrenzungs- und Abrutschsicherungsteiles, indem er vom Tritteil entsprechend weit abgebogen ist und hoch- bzw. absteht, sowie andererseits jene der Aufnahme des Sicherungsseils, nämlich in der Einhängöse, die seitlich offen ist, um das beim Hochsteigen verwendete Sicherungsseil einfach einhängen zu können. Die erfindungsgemäß ausgebildete Steigsprosse bietet somit ein hohes Maß an Sicherheit, während sie doch andererseits eine einfache Herstellung ermöglicht und so preiswert hergestellt werden kann.

Im Interesse einer besonders einfachen Herstellung ist es hierbei vorteilhaft, wenn der Stangenabschnitt zur Bildung der Einhängöse wendelförmig gebogen ist.

Dabei kann vorzugsweise einfach vorgesehen werden, daß der die Einhängöse bildende Stangenabschnitt gegenüber dem Tritteil um insgesamt ungefähr 1¼ Windungen wendelförmig gebogen ist.

Die Einhängöse wird hierbei also durch eine Windung des Stangenabschnittes (entsprechend 360°) gebildet, wobei das Ende des Stangenabschnittes zusätzlich um weitere 90° abgebogen ist, wodurch der Vorteil erreicht wird, daß dieses Stangenende in eine Richtung weg von jener Seite der Steigsprossen gerichtet werden kann, auf der die jeweilige Person an den Steigsprossen hochklettert.

Dabei kann es zweckmäßig sein, ein ausgeprägtes, relativ langes Stangenende vorzusehen, um das Einfädeln bzw. Einhängen des Sicherungsseils unter Führung entlang diesem Stangenende zu erleichtern, und in diesem Fall ist es weiters günstig, wenn ein an die wendelförmige Einhängöse anschließendes äußeres, geradliniges Stangenende vom Tritteil im rechten Winkel, in Draufsicht gesehen, absteht. Ferner ist es hier, um das Einhängen des Sicherungsseiles besonders leicht zu gestalten, auch von Vorteil, wenn das geradlinige äußere Stangenende schräg zu einer Normalebene auf die Achse der wendelförmigen Einhängöse verläuft.

An sich kann die Einhängöse, die durch wendelförmiges Biegen des Stangenabschnittes erhalten wird, in Draufsicht beispielsweise eine längliche, ovale Form haben. Im Interesse einer besonders einfachen Herstellung ist es jedoch günstig, wenn die wendelförmige Einhängöse in Draufsicht kreisförmig ist.

Dabei kann der Stangenabschnitt bei der Herstellung einfach um ein dornartiges, vorgeformtes Werkzeug herum gebogen werden.

Versuche mit der erfindungsgemäß ausgebildeten Steigsprosse haben gezeigt, daß im Falle eines Absturzes einer gesicherten Person (Versuche wurden mit entsprechenden Belastungsmassen durchgeführt, die am Sicherungsseil befestigt waren und aus einer Höhe von 1,60 m oberhalb einer erfindungsgemäßen Sicherheits- Steigsprosse fallen gelassen wurden), also beim "In-das-Seil- fallen", durch den relativ langen Lasthebel, den die Sprossen mit ihrem Tritteil bilden, eine verhältnismäßig große Kerbwirkung im Bereich des inneren Endes des Tritteiles, wo der üblicherweise mit einem Gewinde versehenen Befestigungsabschnitt anschließt, auftritt. Um diese Kerbwirkung so weit wie möglich hintanzuhalten und so eine weitere Erhöhung der Sicherheit zu erreichen, ist es auch von Vorteil, wenn bei Vorsehen eines Befestigungsgewindes am Befestigungsteil dieses Gewinde zum Tritteil hin auslaufend geschnitten ist. Durch ein derartiges auslaufend geschnittenes Befestigungsgewinde wird die unerwünschte Kerbwirkung im Bereich des Übergangs zum Tritteil auf praktisch Null reduziert, so daß ein Brechen oder Abreißen der Steigsprosse in diesen Übergangsbereich bei der bei einem Absturz einer Person auftretenden hohen Belastung (die im Bereich von 20 bis 25 kN liegen kann) verhindert werden kann.

Da die erfindungsgemäße Steigsprosse in der angegebenen Unfallsituation, wenn eine Person in das Sicherungsseil stürzt, zwar einer Biegung unterliegen darf, nicht jedoch brechen darf, sollte sie aus einem Material mit einer ausreichenden Festigkeit bzw. Zähigkeit hergestellt sein, und in diesem Zusammenhang hat sich als besonders vorteilhaft erwiesen, wenn die Steigsprosse aus einem warmverformten und wärmebehandelten Rundstahl besteht. Dabei kann beispielsweise ein Rundstahl mit 20 mm Durchmesser der Güte St42 verwendet werden, der vor dem Biegen erwärmt wird, und der nach der Biegeverformung spannungsfrei geglüht wird. Sodann kann die Steigsprosse in an sich üblicher Weise zwecks Korrosionsschutz feuerverzinkt und/oder mit einem Korrosionsanstrich versehen werden.

Die Erfindung wird nachstehend anhand eines in der Zeichnung veranschaulichten bevorzugten Ausführungsbeispieles noch weiter erläutert. Im einzelnen zeigen dabei in der Zeichnung:
Fig. 1 eine ausschnittsweise Ansicht eines Stromleitungsmastes im Bereich eines Eckstiels, an dem Steigsprossen angebracht sind;
Fig. 2 und 3 Schnitte gemäß den Linien II-II bzw. III-III in Fig. 1;
Fig. 4 eine Draufsicht auf eine erfindungsgemäße Steigsprosse;
Fig. 5 eine Schnittdarstellung dieser Steigsprosse, gemäß der Linie V-V in Fig. 4; und
Fig. 6 eine Seitenansicht der Steigsprosse gemäß Fig. 4.

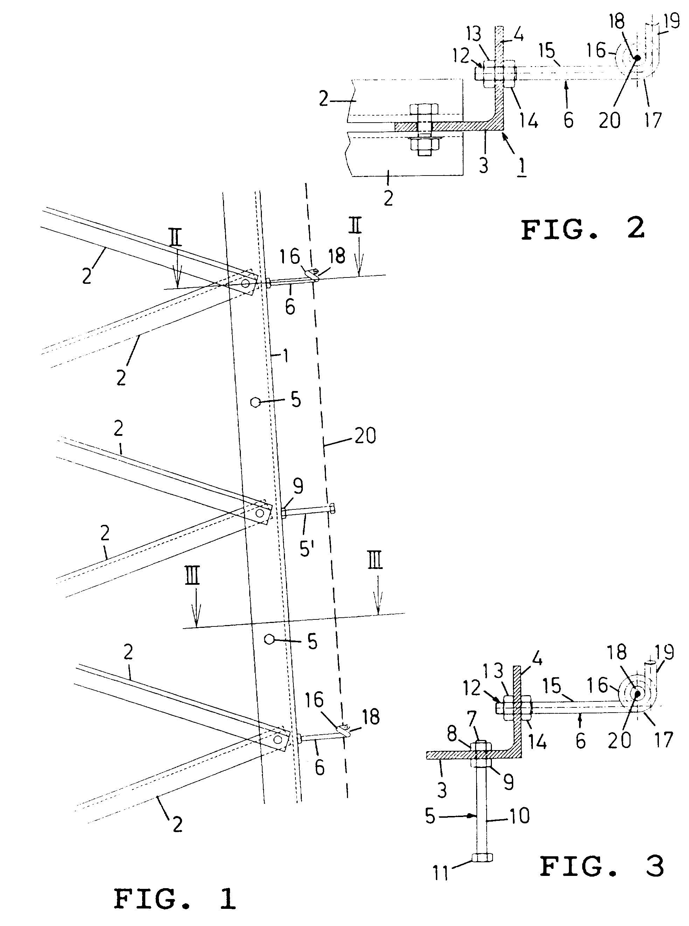

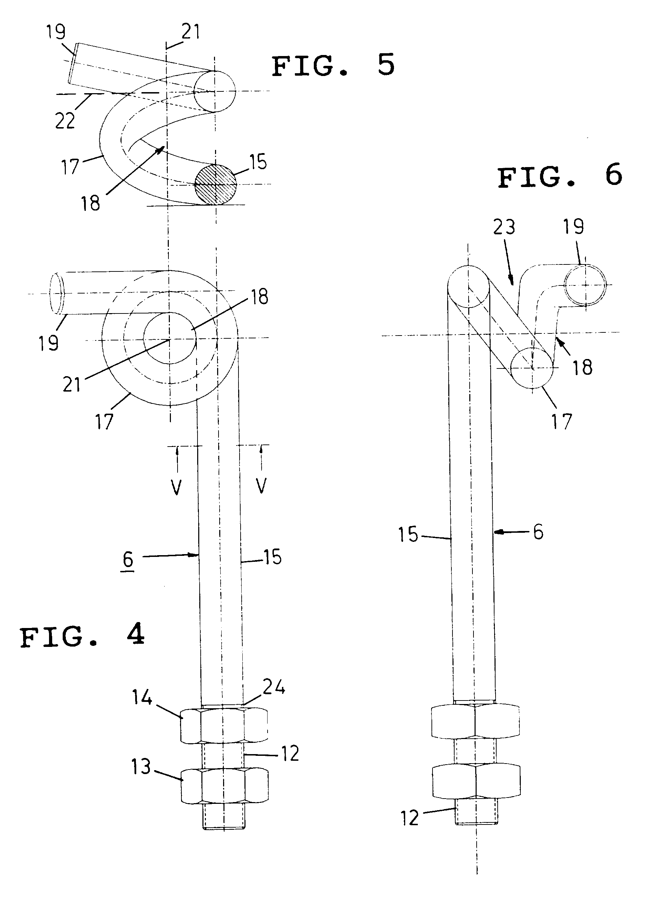

In Fig. 1 ist ein Ausschnitt eines Stromleitungsmastes von herkömmlicher Bauart veranschaulicht, bei der vier Eckstiele, von denen einer in Fig. 1, bei 1, veranschaulicht ist, durch schräge Versteifungsstreben 2 fachwerkartig miteinander verbunden sind. Der Eckstiel 1 besteht, wie insbesondere aus Fig. 2 und 3 ersichtlich ist, aus einem Winkelprofil, und in entsprechender Weise können auch die Streben 2 aus Winkelprofilen bestehen, wie dies an sich herkömmlich ist.

Am Eckstiel 1 sind, wie aus Fig. 1 bis 3 ersichtlich ist, in an sich ebenfalls herkömmlicher Weise Steigsprossen befestigt, die abwechselnd um 90° gegeneinander versetzt sind, d.h. abwechselnd an dem einen bzw. anderen Schenkel 3 bzw. 4 des den Eckstiel 1 bildenden Winkelprofils befestigt sind.

Im einzelnen können dabei beispielsweise herkömmliche Steigsprossen 5 bzw. 5' einerseits sowie - beispielsweise als jede vierte Steigsprosse - erfindungsgemäß ausgebildete Steigsprossen 6 vorgesehen sein. Bei dieser Konfiguration und bei einem an sich üblichen Abstand zwischen zwei gegeneinander um 90° versetzten Steigsprossen 5, 6 bzw. 5, 5' von 40 cm ergibt sich somit ein Abstand der erfindungsgemäß ausgebildeten Sicherheits- Steigsprossen 6 von 160 cm. Dieser Abstand von 1,60 m hat sich als günstig und ausreichend in Zusammenhang mit dem Einhängen eines von hochkletternden Personen verwendeten Sicherungsseiles erwiesen.

Aus Fig. 1 und Fig. 3 ist ersichtlich, daß die herkömmliche Steigsprosse 5 bzw. 5' mit einem Befestigungsteil 7 am jeweiligen Schenkel 3 (bzw. 4 im Fall der Steigsprosse 5') befestigt ist, wobei die Befestigung der herkömmlichen, stangenförmigen Steigsprosse 5 bzw. 5' dadurch erfolgt, daß der Befestigungsteil 7 in Form eines Gewindeabschnitts durch ein Loch im Winkelprofil- Schenkel 3 bzw. 4 gesteckt und mit Hilfe von Muttern 8 bzw. 9 an diesem Schenkel 3 bzw. 4 festgezogen wird. Die bekannte Steigsprosse 5 bzw. 5' besitzt sodann einen stangenförmigen Tritteil 10 sowie am frei auskragenden äußeren Ende einen Trittbegrenzungs- und Abrutschsicherungsteil 11, der durch eine auf einen Gewindeabschnitt aufgeschraubte Mutter gebildet ist.

In entsprechender Weise kann auch die erfindungsgemäß ausgebildete Sicherheits-Steigsprosse 6 aus einem Stangenmaterial gebildet sein, wobei an einem Ende ein Gewinde-Befestigungsabschnitt 12 - ähnlich dem Befestigungsabschnitt 7 bei den herkömmlichen Steigsprossen 5 bzw. 5' - vorgesehen ist, der durch eine Bohrung oder Öffnung im entsprechenden Schenkel 4 des Eckstiel-Winkelprofils 1 gesteckt und mit Hilfe von Muttern 13, 14 festgezogen wird. An diesen Befestigungsteil 12 schließt wieder ein stangenförmiger Tritteil 15 an, an dessen äußerem Ende ein Trittbegrenzungs- und Abrutschsicherungsteil 16 anschließt, dessen Ausbildung nachstehend anhand der Fig. 4 bis 6 noch mehr im Detail erläutert werden soll.

Aus Fig. 3 ist weiters ersichtlich, daß die Sicherheits-Steigsprosse 6 im Hinblick auf die bei einem Absturz auftretenden im Vergleich zu einem bloßen Hochsteigen einer Person ungleich höheren dynamischen Belastungen aus einem wesentlich stärkeren Stangenmaterial im Vergleich zur herkömmlichen Steigsprosse 5 (bzw. 5'), die nur eine statische Last aufzunehmen hat, hergestellt ist. Weiters ist in Fig. 2 der Vollständigkeit halber veranschaulicht, wie die jeweiligen Versteifungsstreben 2 mit Hilfe von Schraubenbolzen und Muttern an die Flanschen bzw. Schenkel, z.B. 3, des den Eckstiel 1 bildenden Winkelprofils angeschlossen sind.

Der Trittbegrenzungs- und Abrutschsicherungsteil 16 der Sicherheits-Steigsprosse 6 besteht, wie außer aus den Fig. 1 bis 3 insbesondere aus den Fig. 4 bis 6 hervorgeht, aus einem vom Tritteil 15 hochgebogenen Stangenabschnitt 17, der dabei wendelförmig zur einer Einhängöse 18 gebogen ist, und dessen freies, äußeres, geradliniges Stangenende 19 in Draufsicht (s. Fig. 2, 3 und 4) rechtwinkelig zum stangenförmigen Tritteil 15 nach hinten, von der auf den Steigsprossen 5 (5') und 6 aufsteigenden Person gesehen, absteht. Dadurch stört dieses freie Stangenende 19 beim Hochklettern nicht, und es ist auch bei einem etwaigen Absturz die Gefährdung der stürzenden Person durch dieses freie Stangenende 19 minimiert.

Die durch den wendelförmig gebogenen Stangenabschnitt 17 gebildetet Einhängöse 18 ist von der Seite her für ein Einhängen eines Sicherungsseiles zugänglich, wobei das freie Stangenende 19 das Einfädeln oder Einhängen des Sicherungsseiles in die Einhängöse 18 erleichtet. Bevor die Konfiguration der Einhängöse 18 nun im Detail anhand der Fig. 4 bis 6 erläutert wird, sei noch darauf hingewiesen, daß in den Fig. 1 bis 3 schematisch bei 20 ein Sicherungsseil veranschaulicht ist, das in die jeweiligen Einhängösen 18 der Sicherheits-Steigsprossen 6 eingehängt ist.

Aus den Fig. 4 bis 6 ist deutlich erkennbar, wie der an den Tritteil 15 der Sicherheits-Steigsprosse 6 anschließende Stangenabschnitt 17 wendelförmig oder schraubenlinienförmig - mit einer Steigung von beispielsweise ungefähr 45° - gebogen ist, um die Einhängöse 18 zu bilden. Diese Einhängöse 18 ist, wie aus Fig. 4 erkennbar ist, in Draufsicht kreisförmig, und das freie Stangenende 19 steht, gemäß dieser Draufsicht in Fig. 4, rechtwinkelig vom stangenförmigen Tritteil 15 ab. Wie ferner aus Fig. 5 ersichtlich ist, verläuft dieses freie äußere Stangenende 19 schräg zur Achse 21 der Einhängöse 18, d.h. unter einem Winkel von beispielsweise ungefähr 15° zu einer Normalebene auf diese Achse 21. Diese Normalebene ist in Fig. 5 bei 22 schematisch angedeutet. Das freie Stangenende 19 führt das Sicherungsseil 20 (Fig. 1 bis 3) beim Einhängen in die Einhängöse 18 zu deren seitlich offenen Einhängzugang 23 (Fig. 6), der durch die Wendelform oder Schraubenlinienform des Stangenabschnitts 17 erhalten wird.

In einem Prototyp wurde die beschriebene Sicherheits-Steigsprosse 6 aus einem 20 mm-Rundstahl hergestellt, welcher vor dem Biegen einer Wärmebehandlung unterzogen und zum Biegen der Einhängöse 18 erhitzt wurde; der Stangenabschnitt 17 wurde über ein entsprechend vorgeformtes Werkzeug maschinell, mit Hilfe von Rollen, gebogen. Nach dem Biegevorgang wurde die Steigsprosse 6 spannungsfrei geglüht, wonach ein Gewinde im Befestigungsabschnitt 12 eingeschnitten wurde.

Dieses Gewinde ist dabei vorzugsweise auslaufend zum Tritteil 15 zu schneiden, um so die Kerbwirkung durch die Gewindeeinschnitte am Übergang 24 zwischen dem Befestigungsteil 12 und dem Tritteil 15 bei den in Absturzsituationen auftretenden dynamischen Belastungen zu verhindern.

Die so erhaltene Steigsprosse 6 wurde sodann mit einer Prüfmasse von 80 kg getestet, wobei die Steigsprosse 6 an einem Steher vergleichbar einem Mast-Eckstiel befestigt wurde, die Prüfmasse an einem "Sicherungs"-Seil an der Einhängöse 18 angehängt und aus einer Höhe von 1,60 m oberhalb der Einhängöse 18 fallengelassen wurde. Dabei wurde, anders als in der Praxis, ein ungedämpftes Stahlseil als "Sicherungs"-Seil verwendet, so daß für diese Prüfung ungünstigere Bedingungen vorgesehen wurden, als sie tatsächlich in der Praxis auftreten würden, wo die herkömmlichen Sicherungsseile - üblicherweise Kernmantelseile-eine gewisse Dehnung aufweisen. Demgemäß wurde bei den durchgeführten Tests eine sehr abrupte dynamische Belastung auf die Steigsprosse 6 herbeigeführt, die einer Kraft von ungefähr 20 bis 25 kN entsprach. Dabei zeigte sich, daß sich die beschriebene Steigsprosse 6 zwar im Bereich des Überganges 24 nach unten verbog, nicht jedoch brach.

Die so getestete Steigsprosse 6 hatte dabei eine Gesamtlänge von 270 mm, der Befestigungsteil 12 hatte eine Länge von 60 mm, die Länge des Tritteils (zwischen dem Übergang 24 und der Einhängöse 18) betrug ungefähr 130 mm, und die Öffnung (lichte Weite) der Einhängöse 18 hat einen Durchmesser von 25 mm. Die Höhe des wendelförmig gebogenen Stangenabschnitts 17 - das ist die Höhe, wie sie aus Fig. 5 ersichtlich ist - betrug 80 mm, wobei die Höhe der eigentlichen Einhängöse (entsprechend einer 360° Windung des Stangenabschnitts 17) 65 mm betrug, was bedeutet, daß der Abstand zwischen den beiden Mittelpunkten der Kreisquerschnitte, wie sie aus Fig. 5 ersichtlich sind, also die Ganghöhe, 45 mm betrug (im Hinblick auf die 20 mm - Materialstärke des Rundstahls). Die Gesamtlänge des freien Stangenendes 19 betrug ungefähr 80 mm.

Als Material für die Sicherheits-Steigsprosse 6 wurde ein zäher Stahl vom Typ St42 verwendet.

Die beschriebene Steigsprosse 6 kann zwecks Korrosionsschutz einer Feuerverzinkung unterzogen werden, und überdies kann im montierten Zustand im Bereich der Schraubverbindung (am Eckstiel 1) eine Farbbeschichtung angebracht werden, die abgesehen von der Korrosionsschutzwirkung im Gewindebereich auch eine zusätzliche Sicherung gegen ein Lockern der Muttern 13 und 14 bildet. Darüber hinaus ermöglicht diese Farbbeschichtung auch eine optische Überprüfung des Befestigungsbereiches im Hinblick auf ein Lockern der Muttern. Für diese Farbbeschichtung können beispielsweise Mischpolymerisate mit Alkydharzen eingesetzt werden.

Es ist ersichtlich, daß die beschriebene Sicherheits-Steigsprosse 6 mit dem zur Einhängöse 18 wendelförmig - um insgesamt 360° + 90° = 450° - gebogenen Stangenabschnitt 17 nicht nur verhältnismäßig einfach und preiswert hergestellt werden kann, sondern überdies zusätzlich zur Funktion einer Abrutschsicherung gegen ein seitliches Abrutschen vom Tritteil 15 auch die Sicherungsfunktion hinsichtlich des Einhängens eines Sicherungsseiles 20 erfüllt. Das freie Stangenende 19 ist weiters, wie insbesondere aus Fig. 3 ersichtlich ist, so abgebogen, daß es bei einem Sturz kein Verletzungsrisiko für die abstürzende, ins Sicherungsseil 20 fallende Person bildet, da diese Person im wesentlichen im durch die Steigsprossen 5 und 6 definierten Raum 25 (Fig. 3) fällt.

Wenn die Erfindung vorstehend anhand eines besonders bevorzugten Ausführungsbeispiels beschrieben wurde, so sind doch Abwandlungen und Modifikationen möglich, ohne den Rahmen der Erfindung zu verlassen wie er in den Ansprüchen definiert ist. So ist es insbesondere auch denkbar, den Stangenabschnitt 17 nicht nur gemäß einem Schraubengang einer Windung bzw. 1¼ Windungen) wendelförmig zu biegen, sondern in beispielsweise zwei Schraubengängen, mit einer Ganghöhe von beispielsweise 45 mm, entsprechend dem Abstand der beiden Mittelpunkte der Kreisquerschnitte, wie vorstehend in Zusammenhang mit Fig. 5 angegeben wurde. Auch könnte das freie Stangenende 19 kürzer vorgesehen werden und insbesondere im Fall von mehreren Windungen für die Einhängöse 18 überhaupt wegfallen. Eine weitere Abwandlung bestünde beispielsweise darin, anstatt einer in Draufsicht (Fig. 4) kreisförmigen Einhängöse 18 eine ovale oder annähernd rechteckige (mit abgerundeten Ecken) Einhängöse 18 aus dem Stangenabschnitt 17 zu biegen.

## Patentansprüche

1. Steigsprosse (6) für Leitungsmasten oder dergl., mit einem stangenförmigen Tritteil (15), an dessen einem Ende ein zur Befestigung am Mast oder dergl. vorgesehener Befestigungsteil (12) und an dessen anderem Ende ein Trittbegrenzungs- und Abrutschsicherungsteil (16) anschließt, dadurch gekennzeichnet, daß der Trittbegrenzungs- und Abrutschsicherungsteil (16) durch einen vom Tritteil (15) abgebogenen und zu einer Einhängöse (18) mit einem seitlichen Einhängzugang (23) für ein Sicherungsseil (20) geformten Stangenabschnitt (17) gebildet ist.

2. Steigsprosse nach Anspruch 1, dadurch gekennzeichnet, daß der Stangenabschnitt (17) zur Bildung der Einhängöse (18) wendelförmig gebogen ist.

3. Steigsprosse nach Anspruch 2, dadurch gekennzeichnet, daß der die Einhängöse (18) bildende Stangenabschnitt (17) gegenüber dem Tritteil (15) um insgesamt ungefähr 1¼ Windungen wendelförmig gebogen ist.

4. Steigsprosse nach Anspruch 3, dadurch gekennzeichnet, daß ein an die wendelförmige Einhängöse (18) anschließendes äußeres, geradliniges Stangenende (19) vom Tritteil (15) im rechten Winkel, in Draufsicht gesehen, absteht.

5. Steigsprosse nach Anspruch 4, dadurch gekennzeichnet, daß das geradlinige äußere Stangenende (19) schräg zu einer Normalebene (22) auf die Achse (21) der wendelförmigen Einhängöse (18) verläuft.

6. Steigsprosse nach einem der Ansprüche 2 bis 5, dadurch gekennzeichnet, daß die wendelförmige Einhängöse (18) in Draufsicht kreisförmig ist.

7. Steigsprosse nach einem der Ansprüche 1 bis 6, dadurch gekennzeichnet, daß bei Vorsehen eines Befestigungsgewindes am Befestigungsteil (12) dieses Gewinde zum Tritteil (15) hin auslaufend geschnitten ist.

8. Steigsprosse nach einem der Ansprüche 1 bis 7, dadurch gekennzeichnet, daß sie aus einem warmverformten und wärmebehandelten Rundstahl besteht.

## Claims

1. A climbing step (6) for transmission line towers or the like, said step comprising a rod-shaped step-on portion (15), a fastening portion (12) provided for attachment to the tower or the like joining one end of said climbing step, and a step-delimiting skid-guard portion (16) joining the other end of said climbing step, characterised in that the step-delimiting skidguard portion (16) is formed by a rod section (17) bent off the step-on portion (15) and shaped into a suspension eye (18) having a lateral suspension entrance (23) for a safety rope (20).

2. A climbing step according to claim 1, characterised in that the rod section (17) is helically bent to form the suspension eye (18).

3. A climbing step according to claim 2, characterised in that the rod section (17) forming the suspension eye (18) is helically bent relative to the step-on portion (15) by a total of approximately 1¼ windings.

4. A climbing step according to claim 3, characterised in that an external, straight-line rod end (19) following upon the helical suspension eye (18) projects from the step-on portion (15) at a right angle, seen in top-view.

5. A climbing step according to claim 4, characterised in that the straight-line external rod end (19) extends inclinedly to a perpendicular plane (22) to the axis (21) of the helical suspension eye (18).

6. A climbing step according to any one of claims 2 to 5, characterised in that the helical suspension eye (18) is circular, seen in top-view.

7. A climbing step according to any one of claims 1 to 6, characterised in that if a fastening thread is provided on the fastening portion (12), such thread is cut so as to taper off towards the step-on portion (15).

8. A climbing step according to any one of claims 1 to 7, characterised in that it consists of a hot-formed and heattreated round steel.

## Revendications

1. Echelon (6) destiné à des pylônes de lignes aériennes ou analogues, comprenant une partie de marche (15) en forme de tige, à l'une des extrémités de laquelle se raccorde une partie de fixation (12) prévue pour la fixation au pylône ou analogue, et à l'autre extrémité de laquelle se raccorde une partie de limitation de marche et de sécurité au glissement (16), caractérisé en ce que partie de limitation de marche et de sécurité au glissement (16) est formée par un tronçon de tige (17) coudé à partir de la partie de marche (15) et formé en un anneau d'accrochage (18) présentant une entrée d'accrochage latérale (23) pour une corde de sécurité (20).

2. Echelon selon la revendication 1, caractérisé en ce que le tronçon de tige (17) est coudé en forme d'hélice pour former l'anneau d'accrochage (18).

3. Echelon selon la revendication 2, caractérisé en ce que le tronçon de tige (17) formant l'anneau d'accrochage (18) est coudé en forme d'hélice, au total d'environ 1¼ de spires par rapport à la partie de marche (15).

4. Echelon selon la revendication 3, caractérisé en ce qu'une extrémité de tige (19) rectiligne, extérieure, se raccordant à l'anneau d'accrochage (18) en forme d'hélice, fait saillie à angle droit de la partie de marche (15), en vue de dessus.

5. Echelon selon la revendication 4, caractérisé en ce que l'extrémité de tige (19) rectiligne, extérieure, s'étend de manière oblique par rapport à un plan (22) normal à l'axe (21) de l'anneau d'accrochage (18) en forme d'hélice.

6. Echelon selon l'une des revendications 2 à 5, caractérisé en ce que l'anneau d'accrochage (18) en forme d'hélice présente une forme circulaire en vue de dessus.

7. Echelon selon l'une des revendications 1 à 6, caractérisé en ce que lorsqu'est prévu un filetage de fixation sur la partie de fixation (12), ce filetage est usiné en sortie progressive de filetage du côté de la partie de marche (15).

8. Echelon selon l'une des revendications 1 à 7, caractérisé en ce qu'il est réalisé en rond d'acier formé à chaud et ayant subi un traitement thermique.
